# EUROPÄISCHE PATENTANMELDUNG

(11) **EP 1 167 424 A2**
(43) Veröffentlichungstag der Anmeldung: **02.01.2002**
(21) Anmeldenummer: 01109324.2
(22) Anmeldetag: 12.04.2001
(51) Int. Cl.: C08G 77/52

(54) **Verfahren zur Herstellung von Silarylensiloxan-Diorganosiloxan-Copolymeren**

(30) Priorität: 23.06.2000 DE 10030686
(71) Anmelder: Wacker-Chemie GmbH, 81737 München (DE)
(72) Erfinder: Müller, Philipp, Dr., 84489 Burghausen (DE); Egerter, Norbert, 84561 Mehring/Öd (DE)
(74) Vertreter: Fritz, Helmut, Dr.

(57) **Zusammenfassung**

Gegenstand der Erfindung ist ein Verfahren zur Herstellung von linearkettigen Copolysiloxanen, bestehend aus Einheiten der allgemeinen Formeln (1) und (2),

[-(R¹R²SiO)ₐ-] (1),

[-(R³R⁴Si-R⁷-SiR⁵R⁶O)_{b}-R³R⁴Si-R⁷-SiR⁵R⁶-] (2),

deren Endgruppen ausgewählt werden aus Si-H und Si-OH, bei dem
(A) Diorganopolysiloxane der allgemeinen Formel (3)

   HO-(R¹R²SiO)ₐ-H (3)
mit (B) Silarylensiloxanverbindungen der allgemeinen Formel (4)

   H-[( R³R⁴Si-R⁷-SiR⁵R⁶O)_{b}-R³R⁴Si-R⁷-SiR⁵R⁶]-H (4),

   in Gegenwart von (C) Übergangsmetallkatalysator umgesetzt werden, wobei in den allgemeinen Formeln (1) bis (4) **R**^{**1**}**, R**^{**2**}**, R**^{**3**}**, R**^{**4**}**, R**^{**5**}**, R**^{**6**}**, R**^{**7**}**, a** und **b,** die in Anspruch 1 angegebenen Bedeutungen aufweisen.

## Beschreibung

Die Erfindung betrifft ein Verfahren zur Herstellung von Silarylensiloxan-Diorganosiloxan-Copolymeren. Die Verknüpfung der Comonomerblöcke erfolgt durch übergangsmetallkatalysierte Dehydrogenolysereaktion zwischen Hydridosilyl- und Hydroxysilylgruppen an den terminalen Siliziumatomen von Silarylensiloxanblöcken und Polydimethylsiloxanblöcken.

Zahlreiche Verfahren zur Herstellung von Blockcopolymeren mit Dimethylsiloxan- und Dimethylsilarylensiloxanblöcken wurden entwickelt.
Erstmalig ist in US-A-3202634 der Aufbau derartiger Blockcopolymere durch Co-Kondensationsreaktion aus silanolterminierten Dimethylsiloxanoliogomeren und silanolterminierten Dimethylsilarylensiloxanoligomeren beschrieben. Der Aufbau von Copolymeren über Kondensationsreaktion bedingt den Einsatz von Kondensationskatalysatoren. Nachteil beim Einsatz dieser Katalysatoren ist die wohlbekannte Labilität der Siloxanbindung gegenüber Equilibrierungsreaktion, d.h. diese Katalysatoren bewirken die Umlagerung des definierten Siloxangerüstes des Blockcopolymeren zu statistisch verteilten Copolymeren. D.h. die durch die Wahl der reaktiven Oligomeren erhaltene hohe Definition eines Blockcopolymeren wird durch die katalysatorbedingte Equilibrierungsreaktion wieder reduziert. Ein weiterer Nachteil ist die aufwendige Herstellung der silanolterminierten Silarylensiloxanblöcke durch Kondensation von dimethylsilanolterminierten aromatischen Silanmonomeren, welche nur über einen mehrstufigen Syntheseweg zugänglich sind.
In US-A-3674739 ist ein Verfahren beschrieben, welches die Reaktion von Bis-organoaminosilarylenen mit silanolterminierten Polydimethylsiloxanen beansprucht. Der Aufbau von definierten Blockcopolymerstrukturen wurde nicht beschrieben. Nachteilig ist weiterhin die Freisetzung von Dialkylaminen bei der Kondensation.

Keines der bekannten Verfahren ermöglicht den gesicherten, definierten Aufbau von Blockcopolymeren, in welchem die Sequenzlängen des Copolymeres den Blocklängen der eingesetzten reaktiven Oligomeren exakt entspricht.

Kawakami et. Al (Macromolecules 199, 32, 3540-3542) beschreibt den Aufbau von hochmolekularem Poly[(oxydimethylsilylen)-(1,4-phenylen)(dimethylsilylen)] durch übergangsmetallkatalysierte Dehydrogenolysreaktion von 1,4-Bis(dimethylsilyl)benzol mit Wasser.

Gegenstand der Erfindung ist ein Verfahren zur Herstellung von linearkettigen Copolysiloxanen, bestehend aus Einheiten der allgemeinen Formeln (1) und (2),

[-(R¹R²SiO)ₐ-] (1,)

[-(R³R⁴Si-R⁷-SiR⁵R⁶O)_{b}-R³R⁴Si-R⁷-SiR⁵R⁶-] (2,)

deren Endgruppen ausgewählt werden aus Si-H und Si-OH, bei dem

### (A) Diorganopolysiloxane der allgemeinen Formel (3)

HO- (R¹R²SiO)ₐ-H (3)

mit (B) Silarylensiloxanverbindungen der allgemeinen Formel (4)

H-[( R³R⁴Si-R⁷-SiR⁵R⁶O)_{b}-R³R⁴Si-R⁷-SiR⁵R⁶]-H (4,)

wobei in den allgemeinen Formeln (1) bis (4)
- **R**^{**1**} **und R**^{**2**}: einen monovalenten, gegebenenfalls halogensubstituierten, gegebenenfalls O-, N-, S-, oder P-Atome enthaltenden, gegebenenfalls aliphatisch ungesättigten Kohlenwasserstoffrest mit 1 bis 20 Kohlenstoffatomen,
- **R**^{**3**}**, R**^{**4**}**, R**^{**5**} **und R**^{**6**}: einen monovalenten, gegebenenfalls halogensubstituierten, gegebenenfalls O-, N-, S-, oder P-Atome enthaltenden, gegebenenfalls aliphatisch oder aromatisch ungesättigten Kohlenwasserstoffrest mit 1 bis 20 Kohlenstoffatomen,
- **R**^{**7**}: einen divalenten, aromatisch ungesättigten, gegebenenfalls halogensubstituierten, gegebenenfalls O-, N-, S-, oder P-Atome enthaltenden Kohlenwasserstoffrest mit 6 bis 100 Kohlenstoffatomen,
- **a**: ganzzahlige Werte von 1 bis 1000 und
- **b**: ganzzahlige Werte von 0 bis 100 bedeuten, in Gegenwart von (C) Übergangsmetallkatalysator umgesetzt werden.

Das Verfahren gewährleistet einen definierten Aufbau der Copolymerstruktur der linearkettigen Copolysiloxane. Die Verknüpfung der reaktiven Oligomeren aus Dimethylsiloxan-(A)und Silarylensiloxanblöcken (B) geschieht durch Dehydrogenolysereaktion von terminalen Hydridosilylgruppen der Silarlyensiloxankette mit terminalen Hydroxysilylgruppen der Dimethylsiloxankette unter Wasserstoffabspaltung und Bildung einer neuen Siloxanbindung. Diese Reaktion ist leicht exotherm und benötigt zur Aktivierung der Hydridosilylfunktion einen geeigneten Übergangsmetallkatalysator.

Der besondere Vorteil des erfindungsgemäßen Verfahrens liegt in der hohen Selektivität der Reaktionsführung, bei der Equilibrierungen oder Umgruppierungen der Siloxanedukte ausgeschlossen sind. D.h. die nach erfindungsgemäßer Methode hergestellten Copolysiloxane enthalten identische Sequenzlängen der eingesetzten Diorganosiloxan- (A) und Silarylensiloxanoligomeren (B). Es werden keine Umgruppierungen bzw. Equilibrierungen der Siloxanbindungen zwischen den eingesetzten Diorganosiloxan- (A) und Silarylensiloxanblöcken (B) beobachtet. Die resultierende Blocklängenverteilung im Copolymer läßt sich erfindungsgemäß durch die Wahl des hydroxyterminierten Diorganopolysiloxans (A) und des hydridosilylterminierten Silarylensiloxans (B) einstellen. Die hohe Selektivität mit dem Ausschluß an Umgruppierungen des Siloxangerüstes zwischen den eingesetzten Comonomerblöcken ist Bedingung für die Erzielung von verbesserten Eigenschaftsprofilen der unter Verwendung der linearkettigen Copolysiloxane hergestellten Siloxanelastomere.

Ein weiterer besonderer Vorteil von neutralen Übergangsmetallkatalysatoren, welche u.a. bevorzugt zur Katalyse von Hydrosilylierungsreaktionen eingesetzt werden, ist deren Inaktivität hinsichtlich der Katalyse der Equilibrierung von Siloxanbindungen. Bei diesem Verfahren ist bei Einsatz von neutralen Katalysatoren, wie z. B. Katalysatoren basierend auf Platin mit der Oxidationsstufe 0, eine Umgruppierung der verknüpften Siloxanblöcke ausgeschlossen. Aus diesem Grund werden im vorliegenden Verfahren Blockcoplymere mit den identischen Sequenzlängen der eingesetzten reaktiven Oligomeren (A) und (B) erhalten.

Ein weiterer Vorteil des erfindungsgemäßen Verfahrens ist die Möglichkeit der Herstellung der linearkettigen Copolysiloxane ohne Zusatz von Lösungsmitteln, welche bei bereits beschriebenen Verfahren zwingend erforderlich ist.

Beispiele für die Reste **R**^{**1**} und **R**^{**2**} sind Alkylreste, wie Methyl-, Ethyl-, Propyl-, Isopropyl-, tert.-Butyl-, n-Pentyl-, iso-Pentyl-, neo-Pentyl-, tert.-Pentyl-, n-Octyl-, 2-Ethylhexyl-, 2,2,4-Trimethylpentyl-, n-Nonyl- und Octadecylrest; Cycloalkylreste, wie Cyclopentyl-, Cyclohexyl-, Cycloheptyl-, Norbornyl-, Adamantylethyl- oder Bornylrest; Aryl- oder Alkarylreste, wie Phenyl-, Ethylphenyl-, Tolyl-, Xylyl-, Mesityl- oder Naphthylrest; Aralkylreste, wie Benzyl-, 2-Phenylpropyl- oder Phenylethylrest, sowie halogenierte und mit organischen Gruppen funktionalisierte Derivate der voranstehenden Reste, wie 3,3,3-Trifluorpropyl-, 3-Iodopropyl-, 3-Isocyanatopropyl-, Aminopropyl-, Methacryloxymethyl- oder Cyanoethylrest.
Beispiele für ungesättigte Reste sind Alkenyl- und Alkinylreste, wie Vinyl-, Allyl-, Isopropenyl-, 3-Butenyl-, 2,4-Pentadienyl-, Butadienyl-, 5-Hexenyl-, Undecenyl-, Ethinyl, Propinyl- und Hexinylrest; Cycloalkenylreste, wie Cyclopentenyl-, Cyclohexenyl-, 3-Cyclohexenylethyl-, 5-Bicycloheptenyl-, Norbornenyl-, 4-Cyclooctenyl- oder Cyclooctadienylrest und Alkenylarylreste.
Bevorzugte Reste **R**^{**1**} und **R**^{**2**} enthalten 1 bis 10 Kohlenstoffatome sowie gegebenenfalls Halogensubstituenten. Besonders bevorzugte Reste **R**^{**1**} und **R**^{**2**} sind Methyl-, Phenyl- und 3,3,3-Trifluorpropylrest, insbesondere der Methylrest.

Beispiele für die Reste **R**^{**3**}**, R**^{**4**}**, R**^{**5**} und **R**^{**6**} sind Alkylreste, wie Methyl-, Ethyl-, Propyl-, Isopropyl-, tert.-Butyl-, n-Octyl-, 2-Ethylhexyl- und Octadecylrest, sowie Cycloalkylreste, wie Cyclopentyl-, Cyclohexyl-, Norbornyl- oder Bornylrest. Weitere Beispiele für **R**^{**3**}**, R**^{**4**}**, R**^{**5**} und **R**^{**6**} sind der Phenyl-, Tolyl-, Xylyl-, Biphenylyl-, Anthryl-, Indenyl-, Phenanthryl-, Naphthyl-, Benzyl-, Phenylethyl- oder Phenylpropylrest, sowie halogenierte und mit organischen Gruppen funktionalisierte Derivate der voranstehenden Reste, wie o-, m-, p-Chlorphenyl-, Pentafluorphenyl-, Bromtolyl-, Trifluortolyl-, Phenoxy-, Benzyloxy-, Benzyloxyethyl-, Benzoyl-, Benzoyloxy-, p-tert.-Butylphenoxypropyl-, 4-Nitrophenyl-, Chinolinyl- oder Pentafluorbenzoyloxyrest.
Bevorzugte Reste **R**^{**3**}**, R**^{**4**}**, R**^{**5**} und **R**^{**6**} sind Kohlenwasserstoffreste mit 1 bis 10 Kohlenstoffatomen. Besonders bevorzugter Rest **R**^{**3**}**, R**^{**4**}**, R**^{**5**} und **R**^{**6**} ist der Methylrest.

Ein bevorzugter Rest **R**^{**7**}, entspricht der allgemeinen Formel (5)

-(O)ₛ-(R⁸)ₜ-(O)ᵤ-(X)_{w}-(O)ᵤ-(R⁸)ₜ-(O)ₛ-, (5,)

wobei
- **s** und **u**: die Werte 0 oder 1,
- **t**: die Werte 0, 1 oder 2,
- **w**: die Werte 1 oder 2,
- **R**^{**8**}: einen bivalten, gegebenenfalls halogenaubstituierten ,gegebenenfalls O-, N-, S-, oder P-Atome enthaltenden Kohlenwasserstoffrest, der frei ist von aliphatisch ungesättigten Gruppen und 1 bis 10 Kohlenstoffatome enthält, wie -CH₂-, -CH₂-CH₂-, -CH₂-CH₂-CH₂-, -CF₂-, -CH₂-CF₂-, -CH₂-CH(CH₃)-, -C(CH₃)₂-, -CH₂-C(CH₃)₂-, -C(CH₃)₂-oder CH₂- und
- **X**: einen bivalenten Rest, welcher ausgewählt wird aus -Ph-, -Ph-O-Ph-, -Ph-S-Ph-, -Ph-SO₂-Ph-, -Ph-C(CH₃)₂-Ph-, Ph-C(CF₃)₂-Ph-, -Ph-C(O)-Ph-, Cyclohexylen oder Norbornylen, wobei -Ph- eine Phenylengruppe bezeichnet, bedeuten.

Besonders bevorzugter Rest **R**^{**7**} ist der Phenylenrest.

Vorzugsweise beträgt die bei 25°C bestimmte Viskosität der Silarylensiloxanverbindungen (B) 1 mPa.s bis 1000000 mPa.s, insbesondere 2 mPa.s bis 100000 mPa.s.

Vorzugsweise beträgt die bei 25°C bestimmte Viskosität der Diorganopolysiloxane (A) 1 mPa.s bis 1000000 mPa.s, insbesondere 2 mPa.s bis 100000 mPa.s.

Übergangsmetallkatalysator (C) dient als Katalysator für die als Dehydrogenolyse bezeichnete Kondensationsreaktion zwischen den Silanolgruppen der silanolterminierten Diorganopolysiloxane

(A) und den Hydridosilylgruppen der hydridosilylterminierten Silarylenpolysiloxane (B). Hierfür besonders geeignet sind bekannte Hydrosilylierungsakatalysatoren. In der Literatur sind zahlreiche Hydrosilylierungskatalysatoren beschrieben. Prinzipiell können alle dem Stand der Technik entsprechenden Hydrosilylierungskatalysatoren verwendet werden.

Als Dehydrogenolysekatalysator (C) können Metalle und deren Verbindungen, wie Platin, Rhodium, Palladium, Ruthenium und Iridium, vorzugsweise Platin, eingesetzt werden. Die Metalle können gegebenenfalls auf feinteiligen Trägermaterialien, wie Aktivkohle, Metalloxiden, wie Aluminiumoxid oder Siliciumdioxid, fixiert sein.
Übergangsmetallkatalysatoren auf Basis von Platin erweisen sich als besonders aktiv.Vorzugsweise werden deshalb Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂.Olefin)₂ und H(PtCl₃.Olefin) verwendet werden, wobei bevorzugt Alkene mit 2 bis 8 Kohlenstoffatomen, wie Ethylen, Propylen, Isomere des Butens und Octens, oder Cycloalkane mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Auch Platin-Katalysatoren mit Phosphor-, Schwefel- und Aminliganden können verwendet werden, z. B. (Ph₃P)₂PtCl₂. Besonders bevorzugt sind neutral reagierende Komplexe des Platins mit Vinylsiloxanen, wie sym-Divinyltetramethyldisiloxan.

Die Menge des eingesetzten Dehydrogenolysekatalysators (C) richtet sich nach der gewünschten Umsetzungsgeschwindigkeit sowie ökonomischen Gesichtpunkten. Üblicherweise werden pro 100 Gew.-Teile umzusetzenden reaktiven Polysiloxanen (A) und (B) vorzugsweise 1 x 10⁻⁵ bis 5 x 10⁻² Gew.-Teile, insbesondere 1 x 10⁻³ bis 1 x 10⁻² Gew.-Teile Platin-Katalysatoren, berechnet als Platin-Metall eingesetzt.

Die Kondensation der reaktiven Polysiloxane (A) und (B) unter Dehydrogenolyse wird vorzugsweise bei Temperaturen von -30°C bis + 180°C erfolgen. Vorzugsweise wird die Reaktion bei Temperaturen von 20°C bis 80°C durchgeführt.

Durch geeignete Einstellung der Stöchiometrie der reaktiven Gruppen der Kettenenden der Polysiloxane (A) und (B) kann ein hohes Molekulargewicht der Copolysiloxane erreicht werden. Vorzugsweise weisen die linearkettigen Copolysiloxane Molekulargewichte von 1000 bis 1000000 g/mol auf.

In den vorstehenden Formeln sind Kombinationen von Symbolen ausgeschlossen, welche Gruppen -O-O- ergeben. Alle vorstehenden Symbole der vorstehenden Formeln weisen ihre Bedeutungen jeweils unabhängig voneinander auf.

In den nachfolgenden Beispielen sind, falls jeweils nicht anders angegeben,
a) alle Drücke 0,10 MPa (abs.);
b) alle Temperaturen 20° C.

### Beispiele:

### Beispiel 1

In einem 250 mL-Dreihalskolben mit Innenthermometer, und Stickstoffspülung werden bei 25°C 100.0 g hydroxysilylterminiertes Polydimethylsiloxan, mit einer Viskosität von 49 mPa.s und einem mittels ²⁹Si-NMR-Spektroskopie bestimmten mittleren Polymerisationsgrad von 35,7 Dimethylsiloxaneinheiten, vorgelegt.
Das Polydimethylsiloxan wurde zuvor mit 0.2 Gew-% Ammoniumhydrogencarbonat neutralisiert und an einem Dünnschichtverdampfer bei 150°C und einem Vakuum von 0.5 mbar von Dimethylsiloxanzyklen und Wasser befreit. Es werden 0.033 g (50 ppm Pt) einer Katalysatorlösung, bestehend aus 85 Gew% Toluol und 15 Gew% Platindivinyltetramethyldisiloxankomplex (Karstedt-Konzentrat) zudosiert. Innerhalb 60 min werden insgesamt 7,35 g 1,4-Bis(dimethylsilyl)benzol tropfenweise zudosiert. Die Innentemperatur erhöht sich hierbei auf 35°C. Nach einer weiteren Stunde Rühren ist die exotherme Reaktion abgeklungen und es wird noch 1 h bei 50°C Innentemperatur und einem Vakuum von 1 mbar erhitzt, bis die Entwicklung von Wasserstoff vollständig abgeklungen ist. Die Viskosität der Probe nimmt hierbei deutlich erkennbar zu. Die analytischen Daten sind in Tabelle 1 wiedergegeben.

### Beispiel 2

In einem 250 mL-Dreihalskolben mit Innenthermometer, und Stickstoffspülung werden bei 25°C 100.0 g hydroxysilylterminiertes Polydimethylsiloxan, mit einem mittels ²⁹Si-NMR-Spektroskopie bestimmten mittleren Polymerisationsgrad von 6,7 Dimethylsiloxaneinheiten, vorgelegt. Das Polydimethylsiloxan wurde zuvor mit 0.2 Gew-% Ammoniumhydrogencarbonat neutralisiert und an einem Dünnschichtverdampfer bei 150°C und einem Vakuum von 0.5 mbar von Dimethylsiloxanzyklen und Wasser befreit. Es werden 0.045 g (50 ppm Pt) einer Katalysatorlösung, bestehend aus 85 Gew% Toluol und 15 Gew% Platindivinyltetramethyldisiloxankomplex (Karstedt-Konzentrat) zudosiert. Innerhalb 3 h werden insgesamt 37.98 g 1,4-Bis(dimethylsilyl)benzol tropfenweise zudosiert. Die Innentemperatur erhöht sich hierbei auf 46°C. Nach weiteren 2 h Rühren ist die exotherme Reaktion abgeklungen und es wird noch 1 h bei 50°C Innentemperatur und einem Vakuum von 1 mbar erhitzt, bis die Entwicklung von Wasserstoff vollständig abgeklungen ist. Die Viskosität der Probe nimmt hierbei deutlich erkennbar zu. Die analytischen Daten sind in Tabelle 1 wiedergegeben.

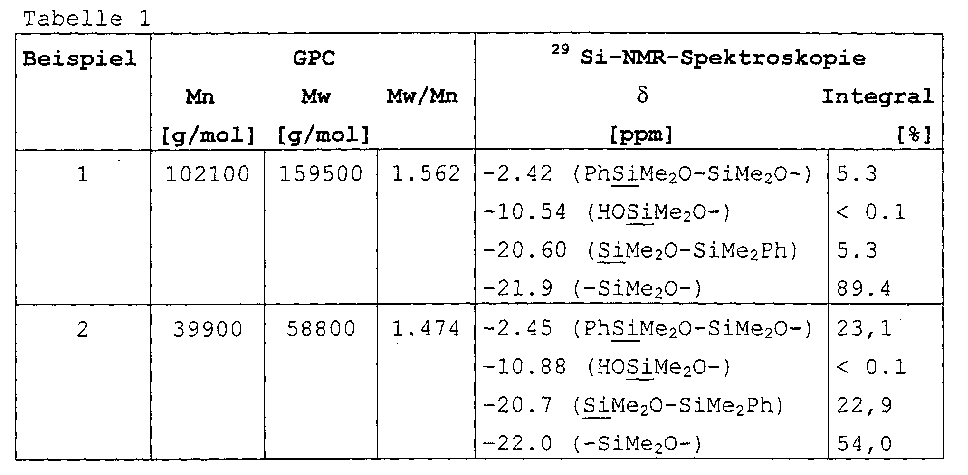

### Beispiel 3 (Herstellung einer Silarylensiloxanverbindung (B))

In einem 250 ml-Dreihalskolben mit Stickstoffspülung werden 19.4 g 1,4-Bis(dimethylsilyl)benzol in 50 ml getrocknetem THF vorgelegt und 0.3 g (100 ppm Pt, bezogen auf die gesamte Eduktmenge) einer Katalysatorlösung, bestehend aus 85 Gew% Toluol und 15 Gew% Platindivinyltetramethyldisiloxankomplex (Karstedt-Konzentrat) zudosiert. Der Ansatz wird auf 0°C abgekühlt und innerhalb 3 h werden 100 g einer Lösung aus 98.5 g getrocknetem THF und 1.5 g Wasser zudosiert. Sofort nach Beginn der Zudosierung beginnt die Entwicklung von Wasserstoff. Nach Ende der Zudosierung wird noch 1 h bei 25°C weitergerührt. Der Ansatz wird von Lösungsmittel befreit. Man erhält ein pastöses Produkt aus Oligo[(oxydimethylsilylen)-(1,4-phenylen)-(dimethylsilylen). Die analytischen Daten sind in Tabelle 2 wiedergegeben

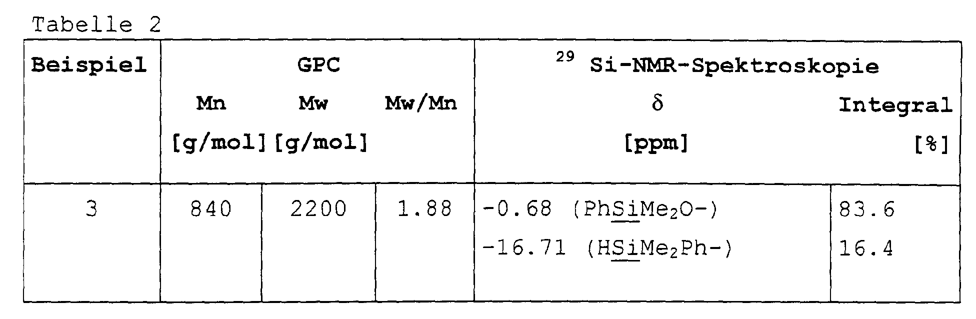

### Beispiel 4

In einem 250 mL-Dreihalskolben mit Innenthermometer, und Stickstoffspülung werden bei 25°C 100.0 g hydroxysilylterminiertes Polydimethylsiloxan, mit einer Viskosität von 49 mPa.s und einem mittels ²⁹Si-NMR-Spektroskopie bestimmten mittleren Polymerisationsgrad von 35,7 Dimethylsiloxaneinheiten, vorgelegt. Es werden 0.033 g einer Katalysatorlösung, bestehend aus 85 Gew% Toluol und 15 Gew% Platindivinyltetramethyldisiloxankomplex (Karstedt-Konzentrat) zudosiert. Innerhalb 60 min werden insgesamt 46.6 g des unter Beispiel 3 beschriebenen Oligo[(oxydimethylsilylen)-(1,4-phenylen)(dimethylsilylen), gelöst in 30 ml getrocknetem THF tropfenweise zudosiert. Die Innentemperatur erhöht sich hierbei auf 29°C. Nach einer weiteren Stunde Rühren ist die exotherme Reaktion abgeklungen und es wird noch 1 h bei 50°C Innentemperatur und einem Vakuum von 1 mbar erhitzt, bis die Entwicklung von Wasserstoff vollständig abgeklungen ist. Die Viskosität der Probe nimmt hierbei deutlich erkennbar zu. Die analytischen Daten sind in Tabelle 3 wiedergegeben.

### Beispiel 5

In einem 250 mL-Dreihalskolben mit Innenthermometer, und Stickstoffspülung werden bei 25°C 100.0 g hydroxysilylterminiertes Polydimethylsiloxan, mit einem mittels ²⁹Si-NMR-Spektroskopie bestimmten mittleren Polymerisationsgrad von 6,7 Dimethylsiloxaneinheiten, vorgelegt. Es werden 0.045 g (50 ppm Pt) einer Katalysatorlösung, bestehend aus 85 Gew% Toluol und 15 Gew% Platindivinyltetramethyldisiloxankomplex (Karstedt-Konzentrat) zudosiert. Innerhalb 60 min werden insgesamt 241.0 g des unter Beispiel 3 beschriebenen Oligo[(oxydimethylsilylen)-(1,4-phenylen)(dimethylsilylen), gelöst in 150 ml getrocknetem THF tropfenweise zudosiert. Die Innentemperatur erhöht sich hierbei auf 34°C. Nach weiteren 2 h Rühren ist die exotherme Reaktion abgeklungen und es wird noch 1 h bei 50°C Innentemperatur und einem Vakuum von 1 mbar erhitzt, bis die Entwicklung von Wasserstoff vollständig abgeklungen ist. Die Viskosität der Probe nimmt hierbei deutlich erkennbar zu. Die analytischen Daten sind in Tabelle 3 wiedergegeben.

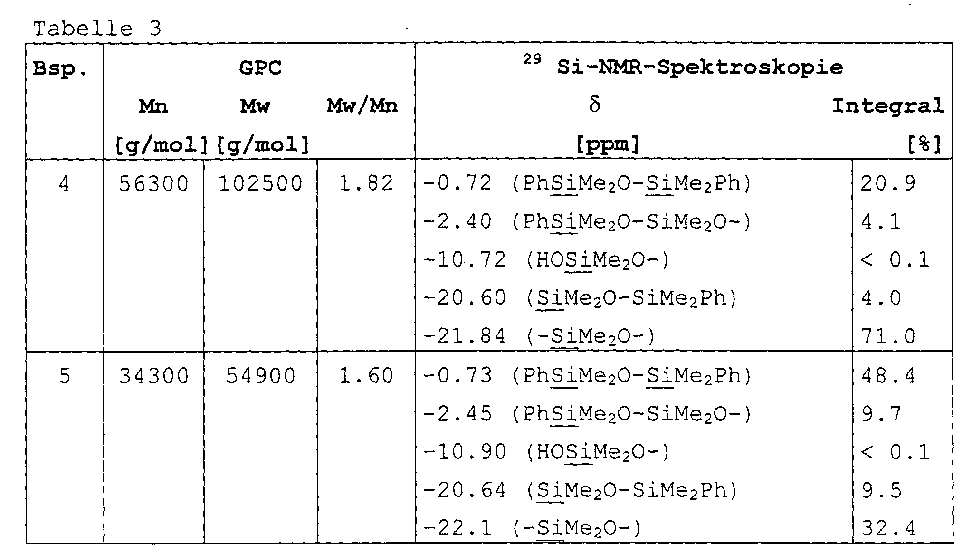

Die in den Tabellen 1 und 3 angegebenen Werte der Gel-Permeationschromatogramme der hergestellten Copolysiloxane belegen die Einsetzbarkeit des erfindungsgemäßen Verfahrens zur Erzielung hoher Molekulargewichte der gewünschten Copolysiloxane. So entsteht das unter Beispiel 1 dargestellte Copolymer mit einem Molekulargewicht von 102100 g/mol durch die Dehydrogenolysereaktion von ca. 35 hydroxyterminierten Oligodimethylsiloxanketten mit der equivalenten Menge an 1,4-Bis(dimethylsilyl)benzol. Ebenso werden bei Einsatz von hydridosilylterminierten Oligosilarylenen hohe Molekulargewichte erzielt, wie in den Beispielen 4 und 5 gezeigt wurde. Die in den Beispielen 4 und 5 angebenen Werte der ²⁹Si-NMR-Spektroskopie belegen die hohe Selektivität der Aufbaureaktion der Copolymeren des erfindungsgemäßen Verfahrens. Die detektierten Kernresonanzsignale belegen, dass bei der übergangsmetallkatalysierten Dehydrogenolysereaktion der hydroxysilylterminierten Dimethylsiloxanblöcke mit den hydridosilylterminierten Silarylenblöcke auschließlich die Verknüpfung der terminalen Siliziumatome unter Bildung einer Siloxanbindung eintritt. Werden die Integrationswerte der Beispiele 4 und 5 zu Grunde gelegt, so ergeben sich im Copolymeren identische Blocklängen bzw. Molekulargewichte wie bei den eingesetzten reaktiven Oligomeren. Dies belegt, dass das erfindungsgemäße Verfahren Umbildungen der Copolymerkette bzw. Equilbrierungsreaktionen zwischen den verschiedenen Copolymerblöcken ausschließt. Die hohe Selektivität des erfindungsgemäßen Verfahrens gewährleistet die Herstellung von definierten Copolymeren aus Dimethylsiloxan- und Silarylenblöcken unter Erhalt der Molekulargewichte bzw. der Sequenzlänge der eingesetzten Oligomere.

## Patentansprüche

1. Verfahren zur Herstellung von linearkettigen Copolysiloxanen, bestehend aus Einheiten der allgemeinen Formeln (1) und (2),
[-(R¹R²SiO)ₐ-] (1,)
[-(R³R⁴Si-R⁷-SiR⁵R⁶O)_{b}-R³R⁴Si-R⁷-SiR⁵R⁶-] (2,)
deren Endgruppen ausgewählt werden aus Si-H und Si-OH, bei dem (A) Diorganopolysiloxane der allgemeinen Formel (3)
HO-(R¹R²SiO)ₐ-H (3)
mit (B) Silarylensiloxanverbindungen der allgemeinen Formel (4)
H-[( R³R⁴Si-R⁷-SiR⁵R⁶O)_{b}-R³R⁴Si-R⁷-SiR⁵R⁶]-H (4,)
wobei in den allgemeinen Formeln (1) bis (4)
**R**^{**1**} **und R**^{**2**} einen monovalenten, gegebenenfalls halogensubstituierten, gegebenenfalls O-, N-, S-, oder P-Atome enthaltenden, gegebenenfalls aliphatisch ungesättigten Kohlenwasserstoffrest mit 1 bis 20 Kohlenstoffatomen,
**R**^{**3**}**, R**^{**4**}**, R**^{**5**} **und R**^{**6**} einen monovalenten, gegebenenfalls halogensubstituierten, gegebenenfalls O-, N-, S-, oder P-Atome enthaltenden, gegebenenfalls aliphatisch oder aromatisch ungesättigten Kohlenwasserstoffrest mit 1 bis 20 Kohlenstoffatomen,
**R**^{**7**} einen divalenten, aromatisch ungesättigten, gegebenenfalls halogensubstituierten, gegebenenfalls O-, N-, S-, oder P-Atome enthaltenden Kohlenwasserstoffrest mit 6 bis 100 Kohlenstoffatomen,
**a** ganzzahlige Werte von 1 bis 1000 und
**b** ganzzahlige Werte von 0 bis 100 bedeuten, in Gegenwart von (C) Übergangsmetallkatalysator umgesetzt werden.

2. Verfahren nach Anspruch 1, bei dem der Übergangsmetallkatalysator (C) ausgewählt wird aus Platin und Platinverbindungen.

3. Verfahren nach Anspruch 1, bei dem **R**^{**1**}**, R**^{**2**}**, R**^{**3**}**, R**^{**4**}**, R**^{**5**} und **R**^{**6**} Kohlenwasserstoffreste mit 1 bis 10 Kohlenstoffatomen bedeuten.
